# EUROPEAN PATENT SPECIFICATION

(11) **EP 4 467 886 B1**
(45) Date of publication and mention of the grant of the patent: **03.12.2025**
(21) Application number: 24170184.6
(22) Date of filing: 15.04.2024
(51) Int. Cl.: F24F 5/00, F24F 11/00, F24F 11/70, F24F 7/04, E04B 2/00

(54) **AIR CONDITIONING SYSTEM FOR AN ENVIRONMENT INSIDE A BUILDING**
KLIMATISIERUNGSSYSTEM FÜR DIE UMGEBUNG IN EINEM GEBÄUDE
SYSTÈME DE CLIMATISATION POUR UN ENVIRONNEMENT À L'INTÉRIEUR D'UN BÂTIMENT

(30) Priority: 24.05.2023 IT 202300010464
(43) Date of publication of application: 27.11.2024
(73) Proprietor: PCP Academy di Sara Bedin, 20093 Cologno Monzese (MI) (IT)
(72) Inventor: BEDIN, Wladimiro, 20093 Cologno Monzese (Milano) (IT)
(74) Representative: Lissandrini, Marco

(56) References cited:
- WO-A1-2022/038398
- CN-A- 105 952 039
- CN-A- 106 524 358
- CN-B- 107 062 474

## Description

### Technical field

The present invention is directed to an air conditioning system for an environment inside a building.

In particular, the invention fits in the sector of sustainable and autonomous homes, that is, those homes called "net-zero" or "off-grid" that do not require the use of wood or gas combustion systems, nor connections to the electricity and/or water network to be able to use, for example, running water, hot sanitary water.

### Prior art

The construction sector is one of the largest producers of carbon dioxide and, therefore, one of the production sectors with the greatest impact on the environment and global climate.

Construction is a highly polluting sector since most of the emissions of carbon dioxide and other gases come precisely from air conditioning and heating systems.

In this regard, therefore, a constructive bioclimatic approach has been developed - especially in recent years - based on the principle of self-sufficiency and the awareness that the main phenomena that negatively affect the environment are caused by the consumption of large quantities of non-renewable energy. Document CN106524358 illustrates an example of a "solar roof", i.e. a bioclimatic technical solution. In particular, this system represents the roof of a building having an air interspace in communication with both the exterior and interior of the building. The presence of a photovoltaic panel on the outer surface of the aforementioned roof allows to generate thermal energy - in addition to a quantity of electrical energy - usable for forming a convective flow of air between the interior and the exterior of the building.

Bioclimatic architecture has been developed especially for medium- and large-sized buildings in urban environments so as to be able to take advantage of renewable sources in addition to the usual energy sources. In fact, given the availability of electricity, water and purification networks, it is currently uneconomic to produce buildings with total autonomy within large cities or developed population centres.

Therefore, it is usual to talk about "near Zero Energy Building", that is, buildings with access to renewable energy when appropriate and, in addition, a transfer in cases of overproduction.

### Summary

In this context, the technical task underlying the present invention is to propose an air conditioning system for an environment inside a building which obviates the drawbacks in the prior art as described above.

In particular, an object of the present invention is to provide an air conditioning system capable of adapting to the climate change of the environment outside the building so as to air-condition the inner environment and, therefore, make it habitable throughout the year.

Another object of the present invention is to provide a substantially autonomous air conditioning system, i.e. which does not require the exploitation of outer energy sources and, in particular, non-renewable energy sources for obtaining the air conditioning of the inner environment. Therefore, specifically, the invention aims to provide an air conditioning system that is capable of reducing, to the point of eliminating, the environmental impact of the known procedures for air conditioning an environment (which usually require, for example, the exploitation of gas or other fuel for winter heating and the exploitation of large quantities of electrical energy for summer air conditioning).

The invention therefore also intends to offer a totally "off-grid" air conditioning system that can also be implemented on buildings arranged in those territories where it is not possible/convenient to install the electrical and/or water and/or gas connection. In this way, therefore, the invention intends to provide the possibility of maintaining a lifestyle totally immersive in nature.

The specified technical task and the specified objects are substantially achieved by an air conditioning system for an environment inside a building, which comprises the technical features disclosed in the independent claim. The dependent claims correspond to further advantageous aspects of the invention.

It should be appreciated that this summary introduces a selection of concepts in simplified form, which will be further elaborated on in the detailed description provided below.

The invention is directed to an air conditioning system for an environment inside a building.

In particular, the air conditioning system comprises an inner planar body and an outer planar body extending along respective longitudinal directions between a first end portion thereof and a second end portion thereof. The outer planar body is arranged superiorly spaced from the inner planar body with respect to a vertical direction to define an interspace. In addition, the inner planar body and the outer planar body have, respectively, a first and a second inner opening and a first and a second outer opening to allow the passage of flows of air between the interspace and, respectively, the environment inside or an environment outside the building.

The outer planar body is at least partly transparent to a light radiation and it further comprises at least one photovoltaic panel interposed between the first end portion and the second end portion for converting light radiation coming from an outer environment into electrical energy.

The system also comprises an absorber panel arranged internally to the interspace so as to define with the outer planar body a conveying channel that extends along a conveying direction and in fluid communication with the inner and outer openings. The absorber panel extends along a transverse direction inclined with respect to the longitudinal direction so that the conveying channel presents a tapered section from the first end portion towards the second end portion of the outer planar body. In addition, the absorber panel is configured to convert the light radiation passing through the outer planar body and the photovoltaic panel into a quantity of thermal energy to be irradiated at least towards the conveying channel.

A plurality of doors is arranged at each of the inner and outer openings. In particular, each door is movable between a closed position thereof and an open position thereof so as to respectively prevent or allow conveying a respective flow of air through the respective opening from/to the conveying channel so as to realize an air conditioning of the environment inside the building.

Advantageously, the aforementioned air conditioning system allows to realize a recirculation of air at least between the interspace (in particular, the conveying channel) and the environment inside the building so as to realize the air conditioning of the same inner environment without having to resort to the use of non-renewable outer energy sources and resources.

In fact, the air present in the interspace heated by the absorber panel (irradiated by the light radiation passing through the outer planar body and the photovoltaic panel) tends to propagate along the conveying channel from the first end portion towards the second end portion. Because of the continuous reduction of space along the conveying channel due to the inclined arrangement of the absorber panel, the speed of the flow of heated air tends to increase gradually and, in accordance with the Bernoulli equation of fluid dynamics, it tends to form a depression which, on the one hand, draws in a flow of air in the interspace from the inner environment, on the other hand, imposes a single direction of propagation of the flow of air inside the interspace, i.e. from the portion adjacent to the first end portions (in which the section of the conveying channel is larger) to the portion adjacent to the second end portions (in which the section of the conveying channel is smaller). In this case, therefore, the air suction advantageously takes place without the aid of any mechanical fan and, therefore, without any energy consumption.

In addition, the provision of a solar panel also allows a usable and/or storable quantity of electrical energy to be generated.

### Brief description of the drawings

Further characteristics and advantages of the present invention will become more apparent from the indicative and thus non-limiting description of a preferred but non-exclusive embodiment of an air conditioning system for an environment inside a building, as illustrated in the attached drawings, in which:
- figures 1 and 2 illustrate, in schematic view, two possible configurations of a first embodiment of an air conditioning system for an environment inside a building;
- figures 3 and 4 illustrate, in schematic view, two possible configurations of a second embodiment of an air conditioning system.

With reference to the drawings, they serve solely to illustrate embodiments of the invention with the aim of better clarifying, in combination with the description, the inventive principles on which the invention is based.

### Detailed description of at least one embodiment

The present invention is directed to an air conditioning system for an environment inside a building which, with reference to the figures, has been generically indicated with the number 1.

Any modifications or variants which, in the light of the description, are evident to the person skilled in the art must be considered to fall within the scope of protection established by the present invention, according to considerations of technical equivalence.

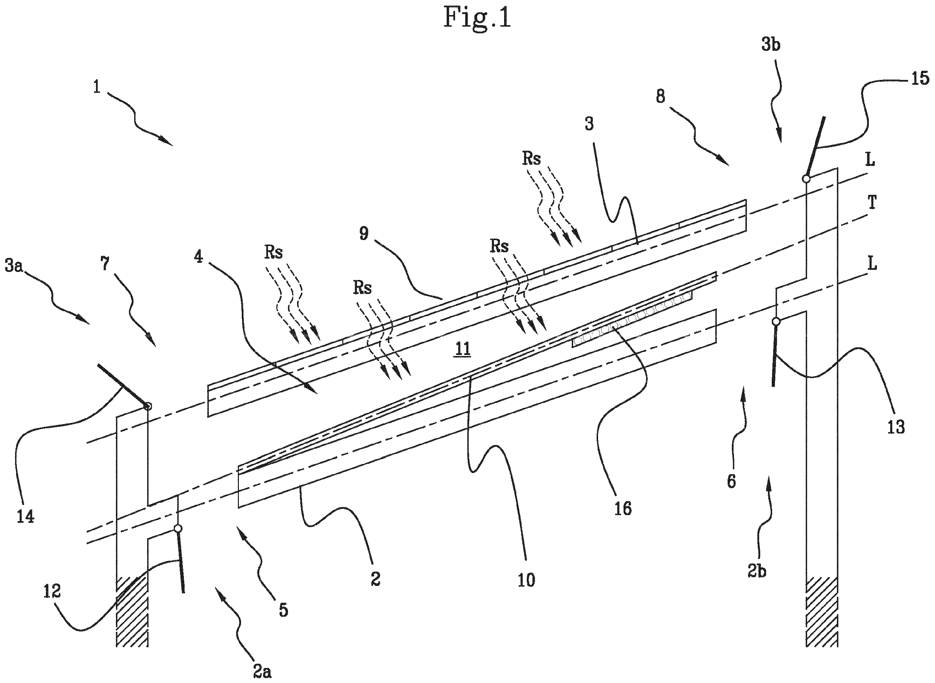

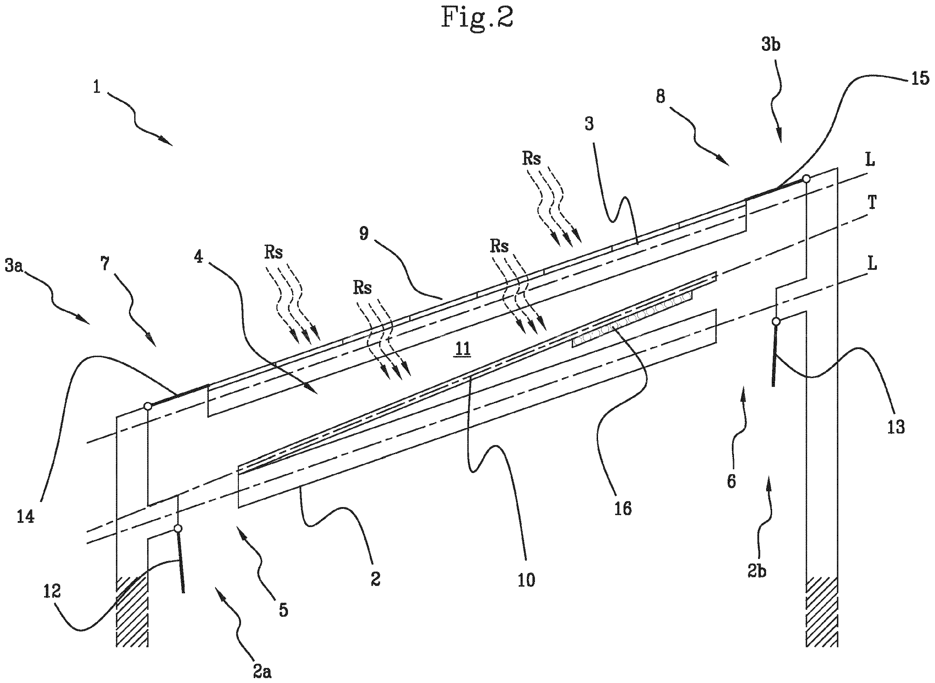

Figures 1 and 2 show two possible configurations of an air conditioning system 1 for an environment inside a building 100.

In particular, the system 1 comprises an inner planar body 2 and an outer planar body 3 extending along respective longitudinal directions L between a first end portion 2a, 3a thereof and a second end portion 2b, 3b thereof.

The outer planar body 3 is arranged superiorly spaced from the inner planar body 2 with respect to a vertical direction to define an interspace 4. In this way, the outer planar body 3 substantially defines an outer surface of a roof, while the inner planar body 2 substantially defines an inner surface of the roof, for example an attic.

In other words, therefore, the present invention allows to realize a "hybrid roof" for a building 100 which, as will be better explained below, allows to exploit different types of energy so as to make the same building 100 autonomous.

In addition, the inner planar body 2 and the outer planar body 3 have, respectively, a first and a second inner opening 5, 6 and a first and a second outer opening 7, 8 adapted to allow the passage of flows of air between the interspace 4 and, respectively, the environment inside or an environment outside the building 100.

Preferably, the inner planar body 2 and the outer planar body 3 extend along respective longitudinal directions L parallel to each other.

Even more preferably, the inner planar body 2 and the outer planar body 3 extend along respective longitudinal directions L inclined with respect to a horizontal direction, for example with respect to the ground. In particular, the degree of inclination with respect to the ground is defined when the air conditioning system 1 is designed as it is closely correlated to the latitude value at which the building with which the air conditioning system 1 is associated is present. It is known, in fact, that the roofs of homes are made more sloping, the higher the altitude and/or the latitude at which the building is located, mainly for two reasons: a first structural reason is that of discharging snow deposited during winter periods, a second energy reason is that of maximising the exploitation of solar energy by the photovoltaic/solar panels.

Generally and preferably, the inner planar body 2 and the outer planar body 3 are arranged inclined by at least 10° with respect to the ground. Even more preferably, at least in the Northern hemisphere, the inner planar body 2 and the outer planar body 3 are oriented southward (conversely, northward in the Southern hemisphere).

The outer planar body 3 comprises at least one photovoltaic panel 9 interposed between the first end portion 3a and the second end portion 3b and, in addition, configured to convert a light radiation coming from the outer environment into electrical energy.

Preferably, the outer planar body 3 is at least partly transparent to light radiation. For example, the outer planar body is made of glass and has a thickness of a few millimetres, preferably 10 millimetres.

Even more preferably, the photovoltaic panel 9 extends over most of the surface extension of the outer planar body 3 leaving part of the outer planar body 3 free so as to allow light radiation to reach the interspace 4 and, therefore, irradiate an absorber panel 10 (better described below). In this way, the solar light radiation is advantageously able to irradiate the photovoltaic panel 9 to generate electrical energy and, at the same time, to irradiate a suitable absorber panel 10 to generate thermal energy inside the interspace 4 as better described below.

In figures 1 and 2 a light radiation, for example a solar radiation, incident on the photovoltaic panel 9 and passing through some portions of the outer planar body 3 was represented with some dashed arrows and with the inscription "Rs".

In accordance with a preferred aspect of the invention, the photovoltaic panel 9 is electrically connected with electrical and/or electronic devices configured to store and/or exploit the electrical energy produced by the photovoltaic panel 9 itself. For example, the photovoltaic panel 9 can be connected to electrical energy storage systems and/or is capable of powering heat pumps and/or resistors configured to heat the water collected in collection tanks (as better described below) and many other uses.

The system 1 also comprises an absorber panel 10 arranged internally to the interspace 4 so as to define, with the outer planar body 3, a conveying channel 11 in fluid communication with the inner and outer openings 5, 6, 7, 8.

In addition, the absorber panel 10 extends along a transverse direction T inclined with respect to the longitudinal direction L so that the conveying channel 11 presents a tapered section from the first end portion 2a, 3a towards the second end portion 2b, 3b of each planar body 2, 3.

In particular, the absorber panel 10 is configured to convert the light radiation passing through the photovoltaic panel 9 into a quantity of thermal energy to be irradiated at least towards the conveying channel 11 so as to induce a flow of heated air along a conveying direction extending from the first end portion 2a, 3a towards the second end portion 2b, 3b.

In this way, the air present in the interspace 4 heated by the absorber panel 10 tends to propagate along the conveying channel 11 from the first end portion towards the second end portion. Because of the continuous reduction of space along the conveying channel 11 due to the inclined arrangement of the absorber panel 10, the speed of the flow of heated air tends to increase gradually and, in accordance with the Bernoulli equation of fluid dynamics, it tends to form a depression which draws in the air present in the inner environment through the opening 6 arranged at the second end portion 2b and/or through the opening 5 arranged at the first end portion 2a of the lower planar body 2. In this case, therefore, the air suction advantageously takes place without the aid of any mechanical fan and, therefore, without any energy consumption.

The system 1 further comprises a plurality of doors 12, 13, 14, 15 arranged at each inner opening 5, 6 and each outer opening 7, 8.

Each door 12, 13, 14, 15 is movable between a closed position thereof and an open position thereof so as to respectively prevent or allow conveying a respective flow of air through the respective opening from/to the conveying channel 11 so as to realize an air conditioning of the environment inside the building 100.

Advantageously, therefore, the aforementioned system 1 is able to achieve the air conditioning of the environment inside the building 100 without having to apply mechanical ventilation systems and/or air conditioning systems that use outer and/or non-renewable energy and resources (such as gas and/or wood combustion).

The air conditioning system 1, in fact, is advantageously able to generate a recirculation of air at least between the interspace 4 and the inner environment by exploiting, as mentioned above, the formation of a depression inside the conveying channel 11 due to the heating of the air by the absorber panel 10 irradiated by outer light radiation (i.e., solar radiation). Even more advantageously, in combination with the tapered conformation of the conveying channel 11, the aforementioned depression defines a unidirectional flow of air flowing between the first end portion 2a, 3a towards the second end portion 2b, 3b drawing in air into the interspace 4 at the first end portion 2a, 3a and emitting it externally to the same interspace 4 at the second end portion 2b, 3b.

The independent movement of the doors 12, 13, 14, 15 arranged at the openings 5, 6, 7, 8 allows to define different operating configurations of the air conditioning system 1. Figures 1 and 2, as anticipated, show two different possible configurations of the air conditioning system 1.

Figure 1 illustrates a first configuration applicable during the summer period, that is, the period in which the temperatures outside the building are high and, therefore, the temperatures of the inner environment must be lower for the well-being of the user.

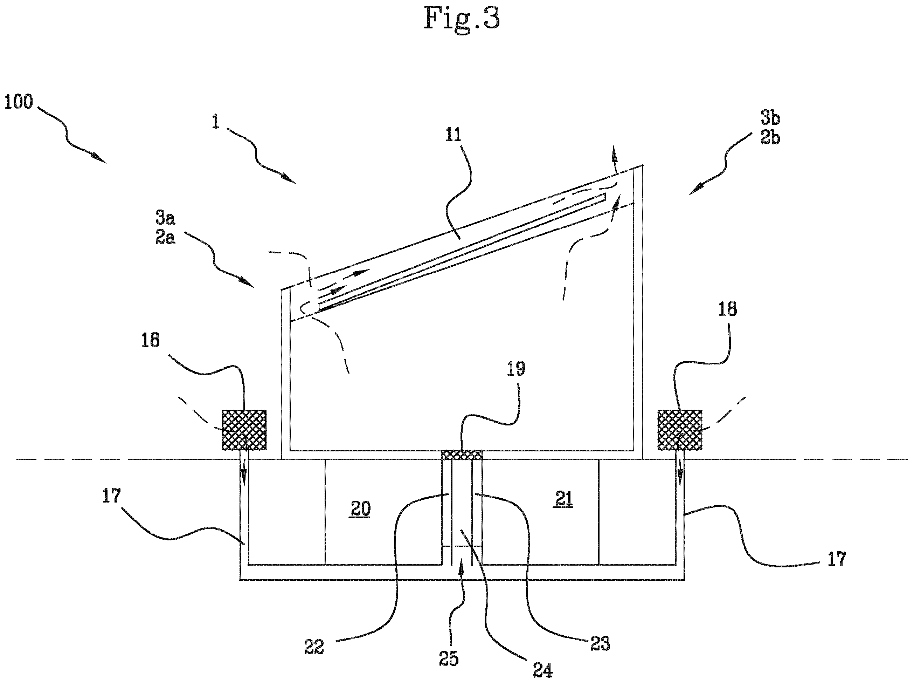

In this configuration of figure 1 it can be seen how all the doors 12, 13, 14, 15 are arranged in the open position in such a way that the air drawn inside the interspace 4 comes both from the outer environment at the door 14 and from the inner environment at both doors 12 and 13. Therefore, the flow of air flowing through the conveying channel 11 and passing from the inner environment to the interspace through the door 13 will tend to escape towards the outer environment through only the door 15 obtained at the second end portion 3b of the outer planar body 3. Figure 3 schematizes, by means of dashed arrows, the flows of air of the configuration of figure 1.

Figure 2, on the other hand, illustrates a second configuration applicable during the winter period, that is, the period in which outer temperatures are cold and the thermal energy inside the building must be kept as constant as possible (and greater than outside) for the well-being of the user.

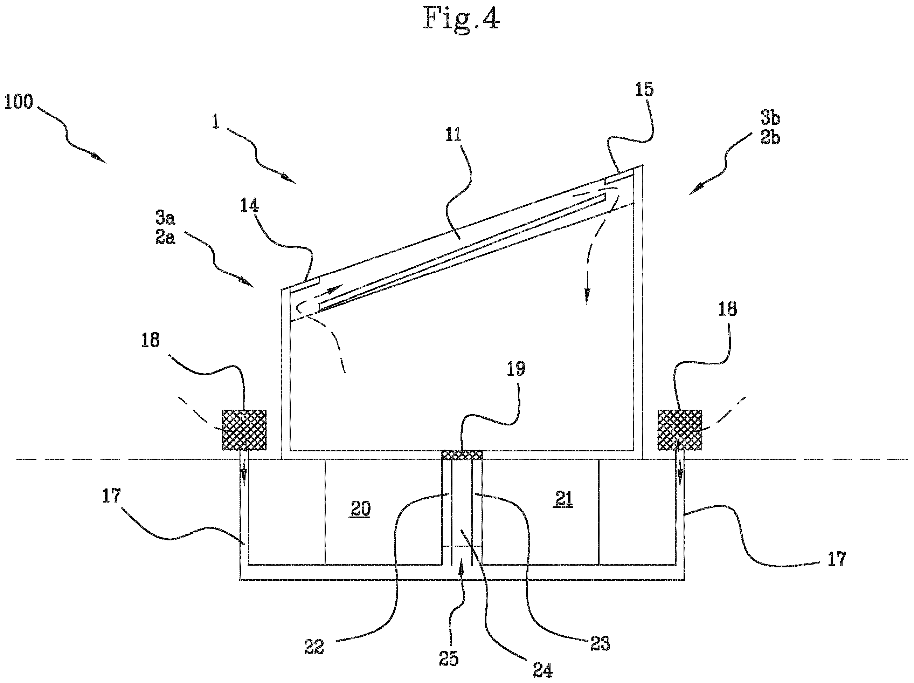

In the configuration of figure 2, the doors 14, 15 arranged at the openings 7, 8 obtained on the outer planar body 3 are kept closed so as to prevent the outer cold air from penetrating the building 100. Conversely, the doors 12, 13 arranged at the openings 5, 6 obtained on the inner planar body 2 are kept open to allow recirculation of air between the interspace 4 and the environment inside the building 100. Figure 4 schematizes, by means of dashed arrows, the flows of air of the configuration of figure 2.

Depending on the temperatures and other climatic parameters - inner and outer - that one intends to control and monitor, the user can change the arrangement of each individual door 12, 13, 14, 15 independently of each other in order to obtain the desired effect. The doors 12, 13, 14, 15, therefore, can also be arranged in intermediate operating positions between the fully open and the fully closed one.

Preferably, the absorber panel 10 is made of a material that is opaque to light radiation.

In this way, the absorber panel 10 is advantageously configured to behave similarly to a blackbody, i.e. an object capable of absorbing most of the light radiation incident thereon which, at a later time, will be irradiated again. In this specific case, the absorbed light energy is irradiated as thermal energy towards at least the conveying channel 11 so as to cause an increase in the temperature of the flow of air present in the same conveying channel 11.

In particular, in accordance with the present invention, the absorber panel 10 is particularly configured to absorb the entire light radiation passed through the photovoltaic panel 9.

Even more preferably, the absorber panel 10 is made of a metallic material, preferably steel.

In this way, the use of a metallic material such as steel allows to maximize both the absorption of the light radiation passing through the photovoltaic panel 9, and the subsequent irradiation in the form of thermal energy at least inside the conveying channel 11.

In this way, the thermal irradiation of the air present in the conveying channel 11 and, therefore, the circulation of air between the interspace 11 and the inner/outer environment of the building 100 are maximized and optimized.

Preferably, the absorber panel 10 has a thickness of a few millimetres, preferably about 3 mm.

Advantageously, the realization and use of an absorber panel 10 having the aforementioned characteristics allows to optimize the storage of light radiation and, in addition, the release of thermal energy, for example during and after sunset.

In accordance with a preferred aspect of the invention, the absorber panel 10 is arranged in contact with the inner planar body 2 at the respective first end portion 2a and, moreover, it is spaced from the outer planar body 3 at the respective second end portion 3b.

Preferably, the distance between the absorber panel 10 and the outer planar body 3 is a few centimetres. Even more preferably it is less than 5 centimetres.

In other words, the height of the conveying channel 11 is reduced by a dimension varying between 10 and 25 centimetres at the first end portion 2a, 3a (i.e. substantially the height of the entire interspace 4) and a dimension varying between 2 and 5 centimetres at the second end portion 2b, 3b.

Preferably, the absorber panel 10 is inclined with respect to the inner planar body 2 by an angle preferably comprised between 5° and 25° so as to realize a tapered conveying channel 11.

Even more preferably, the angle of inclination of the absorber panel 10 depends on the height of the interspace 4, as it is useful for the absorber panel 10 to be positioned a few centimetres from the upper planar body 3 at the second end portion 3b.

In accordance with an aspect of the invention, the system 1 comprises a conduit for conveying a carrier fluid 16, preferably water, arranged in contact with a surface of the absorber panel 10 facing the inner planar body 2 so as to realize a heat exchanger.

In this way, the heat exchanger is advantageously able to produce hot water by exploiting the thermal energy stored by the absorber panel 10.

Even more advantageously, the hot water produced with the heat exchanger can be used immediately as sanitary water (if appropriately purified), or for the construction of a heating system (in the floor or through appropriate heaters), or it can be stored in special tanks to be used for the storage of thermal energy.

In accordance with another aspect of the invention, the system 1 comprises a thermal solar panel (not illustrated) arranged internally to the interspace 4.

Preferably, the solar panel is substantially coplanar with the absorber panel 10 so as to keep the passage between the conveying channel 11 and each inner 5, 6 and outer 7, 8 opening free.

Even more preferably, the solar panel is defined by the aforementioned combination between absorber panel 10 and conduit for conveying a carrier fluid 16.

In accordance with a further aspect of the invention, the system 1 comprises:
- a plurality of actuators (not illustrated) each of which is associated with a corresponding door 12, 13, 14, 15;
- a control unit (not illustrated) connected to each actuator and, therefore, configured to actuate each of said actuators, independently of each other, to cause the movement of each door 12, 13, 14, 15 between the respective open position and the respective closed position as a function of an outer input signal.

In other words, the control unit and the actuators are able to automate the movement of the doors 12, 13, 14, 15 so as to simplify the management of the air conditioning system 1 by a user. The user, in fact, is advantageously able to manage the movement of the doors 12, 13, 14, 15 through a control panel connected to the control unit, through which they are able to send input signals and receive one or more feedback signals indicative of the status of the same system 1 - as better described below.

Even more preferably, as better described below, the control unit is advantageously configured to automatically manage the movement of the doors 12, 13, 14, 15 as a function of input signal coming from the outside, in particular from suitably positioned sensors.

Preferably, the system 1 comprises a plurality of sensors (not illustrated) connected to the control unit and configured to detect one or more of the following parameters: temperature, humidity, pressure and speed of a flow of air.

In particular, the sensors are arranged at least at the openings 5, 6, 7, 8 of the inner planar body 2 and of the outer planar body 3, i.e. at the points of passage of the flow of air from/to the interspace 4. Preferably, the sensors are also arranged at the environment inside and the environment outside the building 100.

The control unit is configured to:
- receive from each sensor a relative detection signal representative of one or more of the following parameters: temperature, humidity, pressure, speed of a flow of air;
- compare each detection signal with a reference signal representative of a desired value at least of temperature and/or humidity and/or pressure of the air in the inner environment;
- actuate the actuators to move the corresponding doors 12, 13, 14, 15 independently of each other between the respective open, closed or intermediate positions (i.e. only partially open) so as to define a flow of fluid between the conveying channel 11 and at least the inner environment so as to air-condition the same inner environment.

Advantageously, therefore, the control unit is able to automatically, accurately, quickly and effectively manage the movement of the doors 12, 13, 14, 15 so as to be able to optimize the air conditioning of the inner environment as a function of the parameters detected at least in the same inner environment, preferably in the inner environment, outer environment and at the openings of access 5, 6, 7, 8 to the interspace 4.

Preferably, the control unit is also connectable with an outer, remote server (via a special wireless communication module) for example, to receive information regarding the weather of the day and, even more preferably, of the following days so as to calibrate the operation of the entire air conditioning system 1.

Even more preferably, the control unit is configured to apply an artificial intelligence algorithm.

In this way, the control unit is advantageously able to optimize the management of the movement of the doors 12, 13, 14, 15 as a function of a considerable amount of input signals that it can receive from the sensors and/or from associated remote devices.

An artificial intelligence algorithm, in fact, is able to continuously learn thanks to a continuous processing of operational input data, actions performed and operational output data (deriving from the aforementioned actions). In addition, an artificial intelligence algorithm is also advantageously able to consider different types of parameters as input signals, for example: the detection signals obtained from the appropriately arranged sensors, the weather predictive signals obtained from remote servers or, possibly, extrapolated from weather cells appropriately connected to the control unit, feedback signals obtained from any devices included within the same air conditioning system 1.

In light of all these possible input signals that can and must be managed, manual methods for managing the doors 12, 13, 14, 15 become scarcely effective as a user has objective limits of capacity and time to be able to perform the necessary calculations.

Any automatic calculation systems based on thermostats, actuators and predefined deterministic logics, on the other hand, are far from being able to obtain an optimal result. These systems tend, in fact, to favour obtaining the achievement of a desired climatic situation (for example, a particular temperature/humidity in the inner environment) even at the expense of the residual resources available.

In other words, the deterministic systems prioritize optimal solutions in the short and medium term, not considering the possibility of even greater future needs.

For example, to obtain an immediate heating advantage on a winter day, a deterministic system could heavily affect the available hot sanitary water reserve of the system 1, without considering that the quantity of remaining water (also including the production capacity of new hot sanitary water) will not be sufficient to cover the entire remaining winter period. This, therefore, could lead to the need to use non-renewable energy resources and/or sources.

Artificial intelligence algorithms, on the other hand, continuously learn with respect to the personal needs of the users and with respect to weather evolution. These algorithms are advantageously able to make countless decisions useful to balance immediate comfort with that of the following days and months through management of the reserves of available resources.

Preferably, the artificial intelligence algorithm applied by the control unit is an algorithm of the "Reinforcement Learning" family. This type of algorithm is able to evolve autonomously, by comparing the decisions made with the results that, in retrospect, these decisions have produced. In the specific case, therefore, adapting to the weather, the thermal characteristics of the building 100 and the habits of the inhabitants.

As anticipated, instead, the traditional artificial intelligence algorithms are designed to provide the best answer to even very complex problems with more tactical than strategic objectives, that is, better suited to solving immediate problems than future ones. Many artificial intelligence algorithms also have the problem of having to be retrained periodically on the latest data.

In accordance with an aspect of the invention, the system 1 comprises at least one fan configured to induce circulation of a flow of air through the conveying channel 11. As described above, the movement of the air inside the conveying channel 11 is guaranteed by the irradiation induced on the absorber panel 10 and by the particular tapered conformation of the conveying channel 11 itself. However, the provision of the fan is intended to accelerate the achievement of the ideal comfort, or to overcome momentary problems or to increase the flow of air in the moments immediately following the change of configuration of the doors, until the system 1 reaches its fluid dynamic equilibrium (generally in a few seconds/minutes).

In accordance with another aspect of the invention better visible in figures 3 and 4, the system 1 comprises a ventilation system provided with at least one channelling 17 extending between at least one suction mouth 18 and an emission mouth 19.

In particular, the suction mouth 18 is arranged facing the outer environment for drawing air from the same outer environment. The emission mouth 19, on the other hand, is arranged facing the inner environment substantially opposite the inner planar body 2 with respect to the vertical direction.

In other words, the ventilation system is advantageously configured to suck air from the outer environment through the suction mouths 18 and introduce such air into the inner environment through the emission mouth 19.

In this way, the ventilation system is able to allow a recirculation of air between the inner environment and the outer environment even if it is not intended to change the position of the doors 12, 13, 14, 15.

In addition, the introduction of air from the outer environment can also be functional for the purposes of the convective motions that must be created between the interspace 4 (in particular, the conveying channel 11) and the environment inside the building 100.

Preferably, the ventilation system comprises forced ventilation means for recovering the air from the outer environment and for conveying it through the channelling 17.

Even more preferably, the channelling 17 extends below the building, buried in the ground, so as to be isolated from the outer environment and, therefore, protected from outer thermal changes.

In accordance with a further aspect of the invention, the system 1 comprises a thermal storage system consisting of:
- a first hot water storage tank 20 in which the stored water is kept at a first predetermined temperature, preferably as high as possible, for example greater than 30 °C;
- a second cold water storage tank 21 in which the stored water is kept at a second predetermined temperature lower than the first temperature, preferably as low as possible, for example lower than 15 °C.

Preferably, each storage tank 20, 21 is suitably insulated to be insulated and, therefore, so as not to give/receive thermal energy to the outside/from the outside. In this way, therefore, each storage tank is suitably configured to define a hot water reserve, i.e. generally at a temperature greater than 30 °C, and a corresponding cold water reserve, i.e. generally at a temperature lower than 15 °C.

Advantageously, therefore, the storage tanks 20, 21 can serve as reserves of sanitary water that can be used by the user to supply a shower and/or a radiator and/or an air conditioner, or as storage systems for thermal energy exploitable, therefore, at a later time.

These storage tanks 20, 21 are preferably connected with the gutters of the building so as to serve as rainwater recovery.

Even more preferably, the storage tanks 20, 21 are arranged below the ground so as to be isolated with respect to the outer environment (having a variable weather during the year). Once buried, in fact, the storage tanks are basically set up in an environment with an average temperature of substantially constant 15 °C (considering places at an altitude not close to the polar circles).

In accordance with a preferred aspect of the invention visible in figures 3 and 4, the channelling 17 comprises three different portions 22, 23, 24 along which the air sucked from the suction mouths 18 is able to flow. The first portion 22 extends in contact with the first hot water storage tank 20 so as to heat the flow of air conveyed towards the emission mouth 19. The second portion 23 extends in contact with the second cold water storage tank 21 so as to cool the flow of air conveyed towards the emission mouth 19. The third portion 24, on the other hand, extends spaced from each storage tank 20, 21. In other words, the third portion 24 is not in contact with any storage tank 20, 21.

Preferably, the ventilation system also comprises a regulation valve 25 configured to operate alternately in three operating modes, each of which enables passage of the flow of air along only one of the aforementioned portions of the channelling 17 between the first 22, the second 23 and the third 24 portion.

In other words, the regulation valve 25 is advantageously configured to vary the conveying path of the air along the channelling 17 so as to cause the regulation of the temperature of the air itself before it is introduced into the inner environment through the emission mouth 19.

Advantageously, therefore, when in summer the outer temperatures are significantly higher than 15 °C, the air exchange of the inner environment is substantially continuous so as to obtain a cooling with respect to the outer temperature. The air, therefore, is sucked by the suction mouths 18 to be heat treated before being introduced into the inner environment. As a function of the condition to be obtained, the air can be conveyed through the second portion 23 of the channelling 17, or through the third portion 24 if the temperature inside the channelling 17 (generally and preferably obtained in the subsoil of the building) is sufficiently lower than that outside.

In winter, when outer temperatures are close to 0 °C, the air exchange is reduced and will occur as needed, that is, when it will be essential to create an inner air exchange since it is, for example, depleted of oxygen. Preferably, on this occasion, the air exchange is controlled as a function of the detection operated by the inner air quality sensors.

In accordance with an aspect of the invention, the control unit is configured to send a regulation signal to the regulation valve 25 so as to select the operating mode of the regulation valve 25 itself as a function of the detection signal received from the sensors.

In other words, as a function of the parameters recorded by the sensors and the comparison made between these parameters and those calculated, the control unit is advantageously configured to determine whether the flow of air sucked by the suction mouth 18 is to be heated, cooled or kept at the initial temperature.

Preferably, therefore, the system 1 also comprises sensors arranged at the suction mouth 18 and/or along the channelling 17 so as to constantly monitor the variation of the temperature of the air sucked from the outer environment and to be introduced into the inner environment.

In accordance with a further aspect of the invention, the system 1 comprises one or more filtering elements configured to filter the flow of air conveyed through the channelling 17.

In this way, therefore, the filtering elements are advantageously able to purify the air drawn from the outer environment before it is diffused into the environment inside the building 100.

In conclusion, therefore, the invention refers to an air conditioning system 1 applicable to a building 100 which has the following advantages:
- air conditioning of the environment inside the building 100 throughout the calendar year;
- air conditioning of the inner environment through the generation of air currents between the inner environment and an appropriate interspace obtained in the roof, so as not to require the exploitation of non-renewable energy and/or resources;
- exploitation of solar energy through a special photovoltaic panel, with which electrical energy can be generated, and a special absorber panel, with which thermal energy can be generated. Both electrical and thermal energy can be stored or used immediately, depending on the need;
- air conditioning of the inner environment also exploiting any ventilation and/or geothermal systems suitably obtained, preferably, in the subsoil of the building 100 so as to be as isolated as possible from the outer thermal changes;
- recovery of rainwater for sanitary and/or domestic use, through the application of special purification and/or sanitation filters;
- greater, if not total, independence from traditional energy sources. In other words, the construction of an air conditioning system and, therefore, of a building, of the "off-grid" type totally disconnected from the usual networks, such as the electrical or hydraulic network;
- possibility of constructing autonomous buildings even in areas that are sparsely inhabited and poorly provided with energy services.

In other words, therefore, the present invention makes it possible to construct a "hybrid roof" having different embodiments and, each of them, different operating configurations capable of generating different types of energy to make the building 100 to which it is applied autonomous from outer energy sources.

## Claims

1. An air conditioning system (1) for an environment inside a building (100), comprising:
- an inner planar body (2) and an outer planar body (3) extending along respective longitudinal directions (L) between a first end portion (2a, 3a) thereof and a second end portion (2b, 3b) thereof and wherein said outer planar body (3) is arranged superiorly spaced apart from said inner planar body (2) with respect to a vertical direction to define an interspace (4), wherein said inner planar body (2) and said outer planar body (3) have, respectively, a first and a second inner opening (5, 6) and a first and a second outer opening (7, 8) adapted to allow the passage of flows of air between the interspace (4) and, respectively, the environment inside or an environment outside the building (100), said outer planar body (3) being at least partly transparent to a light radiation and comprising at least one photovoltaic panel (9) interposed between the first end portion (2a, 3a) and the second end portion (2b, 3b);
- a plurality of doors (12, 13, 14, 15) arranged at each inner opening (5, 6) and each outer opening (7, 8), each door (12, 13, 14, 15) being movable between a closed position thereof and an open position thereof so as to respectively prevent or allow conveying a respective flow of air through the respective opening (5, 6, 7, 8) from/to a conveying duct (11) so as to realize an air conditioning of the environment inside the building (100),
**characterised in that** an absorber panel (10) arranged internally to said interspace (4) so as to define with said outer planar body (3) said conveying channel (11) extending along a conveying direction and in fluid communication with said inner and outer openings (5, 6, 7, 8), said absorber panel (10) extending along a transverse direction (T) inclined with respect to said longitudinal direction (L) so that said conveying channel (11) presents a tapered section from the first end portion (2a, 3a) towards the second end portion (2b, 3b), said absorber panel (10) being configured to convert the light radiation passing through said photovoltaic panel (9) into a quantity of thermal energy to be radiated towards at least said conveying channel (11).

2. The air conditioning system (1) according to claim 1, wherein said absorber panel (10) is made of a material opaque to light radiation.

3. The air conditioning system (1) according to claim 2, wherein said absorber panel (10) is made of a metallic material, preferably steel.

4. The air conditioning system (1) according to any preceding claim, wherein said absorber panel (10) has a thickness of some millimetres, preferably 10 mm.

5. The air conditioning system (1) according to any preceding claim, wherein said absorber panel (10) is arranged in contact with said inner planar body (2) at the respective first end portion (2a) and spaced from said outer planar body (3) at the respective second end portion (3b).

6. The air conditioning system (1) according to any preceding claim, wherein said absorber panel (10) is inclined with respect to said inner planar body (2) by an angle comprised between 5° and 25°.

7. The air conditioning system (1) according to any preceding claim, comprising a conduit for conveying a carrier fluid, preferably water, arranged in contact with a surface of said absorber panel (10) facing said inner planar body (2) so as to realize a heat exchanger.

8. The air conditioning system (1) according to any preceding claim, comprising a solar panel arranged internally to said interspace (4), preferably coplanar to said absorber panel (10) so as to keep free the passage between said conveying channel (11) and each inner and outer opening (5, 6, 7, 8).

9. The air conditioning system (1) according to any preceding claim, comprising:
- a plurality of actuators each of which is associated with a corresponding door (12, 13, 14, 15),
- a control unit connected to each actuator and configured to actuate each actuator, independently of each other, to move each door (12, 13, 14, 15) between the respective open position and the respective closed position as a function of an outer input signal.

10. The air conditioning system (1) according to claim 9, comprising a plurality of sensors connected to the control unit and configured to detect one or more of the following parameters: temperature, humidity, pressure and speed of a flow of air,
said sensors being arranged at said openings (5, 6, 7, 8) of said inner and outer planar bodies (2, 3),
wherein said control unit is configured to
- receive from each sensor a relative detection signal representative of one or more of the following parameters: temperature, humidity, pressure and speed of a flow of air;
- compare each detection signal with a reference signal representative of a desired value of temperature and/or humidity and/or pressure of the air in the inner environment;
- actuate said actuators to move the corresponding doors (12, 13, 14, 15) so as to define a flow of fluid between said conveying channel (11) and at least the inner environment so as to air-condition the same inner environment.

11. The air conditioning system (1) according to claim 10, wherein said sensors are arranged at least at one door (12, 13, 14, 15), in the environment inside the building (100) and in the environment outside the building (100).

12. The air conditioning system (1) according to any preceding claim, comprising at least one fan configured to induce circulation of a flow of air through said conveying channel (11).

13. The air conditioning system (1) according to any preceding claim, comprising a ventilation system consisting of at least one channelling (17) extending between at least one suction mouth (18) and an emission mouth (19),
wherein said suction mouth (18) is arranged facing the outer environment for drawing air and said emission mouth (19) is arranged facing said inner environment substantially opposite said inner planar body (2) with respect to the vertical direction.

14. The air conditioning system (1) according to any preceding claim, comprising thermal storage system consisting of:
- a first hot water storage tank (20) in which the stored water is kept at a first predetermined temperature;
- a second cold water storage tank (21) in which the stored water is kept at a second predetermined temperature lower than said first temperature.

15. The air conditioning system (1) according to claims 13 and 14, wherein said channelling (17) comprises
a first portion (22) extending in contact with said first hot water storage tank (20) so as to heat the flow of air conveyed towards said emission mouth;
a second portion (23) extending in contact with said second cold water storage tank (21) so as to cool the flow of air conveyed towards said emission mouth;
a third portion (24) extending spaced from each storage tank (20, 21);
a regulation valve (25) configured to operate alternately in three operating modes, each of which enables passage of said flow of air along only one portion of said channelling (17) between the first, second and third portions (22, 23, 24).

16. The air conditioning system (1) according to claims 10 and 15, wherein said control unit is configured to send a regulation signal to said regulation valve (25) so as to select the operating mode of said regulation valve (25) as a function of the detection signal received from said sensors.

## Patentansprüche

1. Klimatisierungssystem (1) für eine Umgebung innerhalb eines Gebäudes (100), umfassend:
- einen inneren planaren Körper (2) und einen äußeren planaren Körper (3), die sich entlang jeweiliger Längsrichtungen (L) zwischen einem ersten Endabschnitt (2a, 3a) davon und einem zweiten Endabschnitt (2b, 3b) davon erstrecken, und wobei der äußere planare Körper (3) in Bezug auf eine vertikale Richtung höher beabstandet von dem inneren planaren Körper (2) angeordnet ist, um einen Zwischenraum (4) zu definieren, wobei der innere planare Körper (2) und der äußere planare Körper (3) jeweils eine erste und eine zweite innere Öffnung (5, 6) und eine erste und eine zweite äußere Öffnung (7, 8) aufweisen, die dazu ausgestaltet sind, den Durchtritt von Luftströmen zwischen dem Zwischenraum (4) und der Umgebung innerhalb bzw. einer Umgebung außerhalb des Gebäudes (100) zu ermöglichen, wobei der äußere planare Körper (3) für eine Lichtstrahlung zumindest teilweise transparent ist und mindestens ein Photovoltaik-Paneel (9) umfasst, das zwischen dem ersten Endabschnitt (2a, 3a) und dem zweiten Endabschnitt (2b, 3b) angeordnet ist;
- eine Vielzahl von Türen (12, 13, 14, 15), die an einer jeden inneren Öffnung (5, 6) und einer jeden äußeren Öffnung (7, 8) angeordnet sind, wobei eine jede Tür (12, 13, 14, 15) zwischen einer geschlossenen Position davon und einer offenen Position davon bewegbar ist, um einen jeweiligen Luftstrom durch die jeweilige Öffnung (5, 6, 7, 8) von/zu einer Förderrohrleitung (11) zu verhindern oder zu ermöglichen, um eine Klimatisierung der Umgebung innerhalb des Gebäudes (100) zu erzielen,
**dadurch gekennzeichnet, dass** ein Absorberpaneel (10) im Inneren des Zwischenraums (4) angeordnet ist, um mit dem äußeren planaren Körper (3) den Förderkanal (11) zu definieren, der sich entlang einer Förderrichtung erstreckt und in Fluidkommunikation mit den inneren und äußeren Öffnungen (5, 6, 7, 8) steht, wobei sich das Absorberpaneel (10) entlang einer Querrichtung (T) erstreckt, die in Bezug auf die Längsrichtung (L) geneigt ist, so dass der Förderkanal (11) einen sich verjüngenden Abschnitt von dem ersten Endabschnitt (2a, 3a) in Richtung des zweiten Endabschnitts (2b, 3b) aufweist, wobei das Absorberpaneel (10) ausgelegt ist, um die Lichtstrahlung, die durch das Photovoltaik-Paneel (9) hindurchgeht, in eine Menge an Wärmeenergie umzuwandeln, die in Richtung zumindest des Förderkanals (11) abgestrahlt werden soll.

2. Klimatisierungssystem (1) nach Anspruch 1, wobei das Absorberpaneel (10) aus einem für Lichtstrahlung undurchlässigen Material hergestellt ist.

3. Klimatisierungssystem (1) nach Anspruch 2, wobei das Absorberpaneel (10) aus einem metallischen Material, vorzugsweise Stahl, hergestellt ist.

4. Klimatisierungssystem (1) nach einem der vorhergehenden Ansprüche, wobei das Absorberpaneel (10) eine Dicke von einigen Millimetern, vorzugsweise 10 mm, aufweist.

5. Klimatisierungssystem (1) nach einem der vorhergehenden Ansprüche, wobei das Absorberpaneel (10) in Kontakt mit dem inneren planaren Körper (2) an dem jeweiligen ersten Endabschnitt (2a) und beabstandet von dem äußeren planaren Körper (3) an dem jeweiligen zweiten Endabschnitt (3b) angeordnet ist.

6. Klimatisierungssystem (1) nach einem der vorhergehenden Ansprüche, wobei das Absorberpaneel (10) in Bezug auf den inneren planaren Körper (2) um einen Winkel zwischen 5° und 25° geneigt ist.

7. Klimatisierungssystem (1) nach einem der vorhergehenden Ansprüche, umfassend eine Leitung zum Befördern eines Trägerfluids, vorzugsweise Wasser, die in Kontakt mit einer Oberfläche des Absorberpaneels (10) angeordnet ist, das dem inneren planaren Körper (2) zugewandt ist, um einen Wärmetauscher zu realisieren.

8. Klimatisierungssystem (1) nach einem der vorhergehenden Ansprüche, umfassend ein Solarpaneel, das im Inneren des Zwischenraums (4) angeordnet ist, vorzugsweise koplanar zu dem Absorberpaneel (10), um den Durchgang zwischen dem Förderkanal (11) und einer jeden inneren und äußeren Öffnung (5, 6, 7, 8) freizuhalten.

9. Klimatisierungssystem (1) nach einem der vorhergehenden Ansprüche, umfassend:
- eine Vielzahl von Aktuatoren, von denen ein jeder einer entsprechenden Tür (12, 13, 14, 15) zugeordnet ist;
- eine Steuereinheit, die mit einem jeden Aktuator verbunden und dazu ausgelegt ist, einen jeden Aktuator unabhängig voneinander zu betätigen, um eine jede Tür (12, 13, 14, 15) als Funktion eines äußeren Eingangssignals zwischen der jeweiligen offenen Position und der jeweiligen geschlossenen Position zu bewegen.

10. Klimatisierungssystem (1) nach Anspruch 9, umfassend eine Vielzahl von Sensoren, die mit der Steuereinheit verbunden und ausgelegt sind, um einen oder mehrere der folgenden Parameter zu erfassen: Temperatur, Feuchtigkeit, Druck und Geschwindigkeit eines Luftstroms,
wobei die Sensoren an den Öffnungen (5, 6, 7, 8) des inneren und äußeren planaren Körpers (2, 3) angeordnet sind,
wobei die Steuereinheit ausgelegt ist, um
- von einem jeden Sensor ein relatives Erfassungssignal zu empfangen, das für einen oder mehrere der folgenden Parameter repräsentativ ist: Temperatur, Feuchtigkeit, Druck und Geschwindigkeit eines Luftstroms;
- ein jedes Erfassungssignal mit einem Referenzsignal zu vergleichen, das für einen gewünschten Wert von Temperatur und/oder Feuchtigkeit und/oder Druck der Luft in der inneren Umgebung repräsentativ ist;
- die Aktuatoren zu betätigen, um die entsprechenden Türen (12, 13, 14, 15) zu bewegen, um einen Fluidstrom zwischen dem Förderkanal (11) und zumindest der inneren Umgebung zu definieren, um die gleiche innere Umgebung zu klimatisieren.

11. Klimatisierungssystem (1) nach Anspruch 10, wobei die Sensoren zumindest an einer Tür (12, 13, 14, 15), in der Umgebung innerhalb des Gebäudes (100) und in der Umgebung außerhalb des Gebäudes (100) angeordnet sind.

12. Klimatisierungssystem (1) nach einem der vorhergehenden Ansprüche, umfassend mindestens ein Gebläse, das dazu ausgelegt ist, eine Zirkulation eines Luftstroms durch den Förderkanal (11) zu induzieren.

13. Klimatisierungssystem (1) nach einem der vorhergehenden Ansprüche, umfassend ein Belüftungssystem, das aus mindestens einer Kanalisierung (17) besteht, die sich zwischen mindestens einer Saugmündung (18) und einer Emissionsmündung (19) erstreckt,
wobei die Saugmündung (18) der äußeren Umgebung zum Ansaugen von Luft zugewandt angeordnet ist und die Emissionsmündung (19) der inneren Umgebung im Wesentlichen gegenüber dem inneren planaren Körper (2) in Bezug auf die vertikale Richtung zugewandt angeordnet ist.

14. Klimatisierungssystem (1) nach einem der vorhergehenden Ansprüche, umfassend ein Wärmespeichersystem, bestehend aus:
- einem ersten Heißwasserspeichertank (20), in dem das gespeicherte Wasser auf einer ersten vorbestimmten Temperatur gehalten wird;
- einem zweiten Kaltwasserspeichertank (21), in dem das gespeicherte Wasser auf einer zweiten vorbestimmten Temperatur gehalten wird, die niedriger als die erste Temperatur ist.

15. Klimatisierungssystem (1) nach den Ansprüchen 13 und 14, wobei die Kanalisierung (17) umfasst
einen ersten Abschnitt (22), der sich in Kontakt mit dem ersten Heißwasserspeichertank (20) erstreckt, um den Luftstrom zu erwärmen, der zu der Emissionsmündung befördert wird;
einen zweiten Abschnitt (23), der sich in Kontakt mit dem zweiten Kaltwasserspeichertank (21) erstreckt, um den in Richtung der Emissionsmündung geförderten Luftstrom zu kühlen; einen dritten Abschnitt (24), der sich beabstandet von einem jeden Speichertank (20, 21) erstreckt;
ein Regelventil (25), das dazu ausgelegt ist, abwechselnd in drei Betriebsmodi zu arbeiten, von denen ein jeder den Durchgang des Luftstroms entlang nur eines Abschnitts der Kanalisierung (17) zwischen dem ersten, zweiten und dritten Abschnitt (22, 23, 24) ermöglicht.

16. Klimatisierungssystem (1) nach den Ansprüchen 10 und 15, wobei die Steuereinheit dazu ausgelegt ist, ein Regelsignal an das Regelventil (25) zu senden, um den Betriebsmodus des Regelventils (25) als Funktion des von den Sensoren empfangenen Erfassungssignals auszuwählen.

## Revendications

1. Système de climatisation (1) pour un environnement à l'intérieur d'un bâtiment (100), comprenant :
- un corps planaire intérieur (2) et un corps planaire extérieur (3) s'étendant le long de directions longitudinales (L) respectives entre une première partie d'extrémité (2a, 3a) de ceux-ci et une seconde partie d'extrémité (2b, 3b) de ceux-ci et dans lequel ledit corps planaire extérieur (3) est disposé de manière espacée dans la partie supérieure à partir dudit corps planaire intérieur (2) par rapport à une direction verticale afin de définir un espace intermédiaire (4), dans lequel ledit corps planaire intérieur (2) et ledit corps planaire extérieur (3) comportent, respectivement, une première et une seconde ouvertures intérieures (5, 6) et une première et une seconde ouvertures extérieures (7, 8) adaptées pour permettre le passage de flux d'air entre l'espace intermédiaire (4) et, respectivement, l'environnement intérieur ou un environnement extérieur du bâtiment (100), ledit corps planaire extérieur (3) étant au moins partiellement transparent à un rayonnement lumineux et comprenant au moins un panneau photovoltaïque (9) interposé entre la première partie d'extrémité (2a, 3a) et la seconde partie d'extrémité (2b, 3b) ;
- une pluralité de portes (12, 13, 14, 15) disposées en correspondance de chaque ouverture intérieure (5, 6) et de chaque ouverture extérieure (7, 8), chaque porte (12, 13, 14, 15) étant mobile entre une position fermée de celle-ci et une position ouverte de celle-ci de manière à empêcher ou permettre respectivement l'acheminement d'un flux d'air respectif à travers l'ouverture (5, 6, 7, 8) respective à partir d'un conduit d'acheminement (11) ou vers celui-ci afin de réaliser une climatisation de l'environnement à l'intérieur du bâtiment (100),
**caractérisé en ce qu'**un panneau absorbeur (10) est disposé à l'intérieur dudit espace intermédiaire (4) de manière à définir avec ledit corps planaire extérieur (3) ledit canal d'acheminement (11) s'étendant le long d'une direction d'acheminement et en communication fluidique avec lesdites ouvertures intérieure et extérieure (5, 6, 7, 8), ledit panneau absorbeur (10) s'étendant le long d'une direction transversale (T) inclinée par rapport à ladite direction longitudinale (L) de sorte que ledit canal d'acheminement (11) présente une section conique de la première partie d'extrémité (2a, 3a) vers la seconde partie d'extrémité (2b, 3b), ledit panneau absorbeur (10) étant configuré pour convertir le rayonnement lumineux passant à travers ledit panneau photovoltaïque (9) en une quantité d'énergie thermique à rayonner vers au moins ledit canal d'acheminement (11).

2. Système de climatisation (1) selon la revendication 1, dans lequel ledit panneau absorbeur (10) est constitué d'un matériau opaque au rayonnement lumineux.

3. Système de climatisation (1) selon la revendication 2, dans lequel ledit panneau absorbeur (10) est constitué d'un matériau métallique, de préférence de l'acier.

4. Système de climatisation (1) selon l'une quelconque des revendications précédentes, dans lequel ledit panneau absorbeur (10) présente une épaisseur de quelques millimètres, de préférence 10 mm.

5. Système de climatisation (1) selon l'une quelconque des revendications précédentes, dans lequel ledit panneau absorbeur (10) est disposé en contact avec ledit corps planaire intérieur (2) en correspondance de la première partie d'extrémité (2a) respective et espacé dudit corps planaire extérieur (3) en correspondance de la seconde partie d'extrémité (3b) respective.

6. Système de climatisation (1) selon l'une quelconque des revendications précédentes, dans lequel ledit panneau absorbeur (10) est incliné par rapport audit corps planaire intérieur (2) selon un angle compris entre 5 et 25°.

7. Système de climatisation (1) selon l'une quelconque des revendications précédentes, comprenant un conduit pour acheminer un fluide caloporteur, de préférence de l'eau, disposé en contact avec une surface dudit panneau absorbeur (10) faisant face audit corps planaire intérieur (2) de manière à réaliser un échangeur de chaleur.

8. Système de climatisation (1) selon l'une quelconque des revendications précédentes, comprenant un panneau solaire disposé à l'intérieur dudit espace intermédiaire (4), de préférence coplanaire audit panneau absorbeur (10) de manière à laisser libre le passage entre ledit canal d'acheminement (11) et chaque ouverture intérieure et extérieure (5, 6, 7, 8).

9. Système de climatisation (1) selon l'une quelconque des revendications précédentes, comprenant :
- une pluralité d'actionneurs dont chacun est associé à une porte (12, 13, 14, 15) correspondante ;
- une unité de commande relié à chaque actionneur et configurée pour actionner chaque actionneur, indépendamment les uns des autres, afin de déplacer chaque porte (12, 13, 14, 15) entre la position ouverte respective et la position fermée respective en fonction d'un signal d'entrée extérieur.

10. Système de climatisation (1) selon la revendication 9, comprenant une pluralité de capteurs reliés à l'unité de commande et configurés pour détecter un ou plusieurs des paramètres suivants : température, humidité, pression et vitesse d'un flux d'air,
lesdits capteurs étant disposés en correspondance desdites ouvertures (5, 6, 7, 8) desdits corps planaires intérieur et extérieur (2, 3),
dans lequel ladite unité de commande est configurée pour
- recevoir de chaque capteur un signal de détection relatif représentatif d'un ou plusieurs des paramètres suivants : température, humidité, pression et vitesse d'un flux d'air ;
- comparer chaque signal de détection à un signal de référence représentatif d'une valeur souhaitée de température et/ou d'humidité et/ou de pression de l'air dans l'environnement intérieur ;
- actionner lesdits actionneurs pour déplacer les portes (12, 13, 14, 15) correspondantes de manière à définir un flux de fluide entre ledit canal d'acheminement (11) et au moins l'environnement intérieur afin de climatiser le même environnement intérieur.

11. Système de climatisation (1) selon la revendication 10, dans lequel lesdits capteurs sont disposés au moins en correspondance d'une porte (12, 13, 14, 15), dans l'environnement à l'intérieur du bâtiment (100) et dans l'environnement à l'extérieur du bâtiment (100).

12. Système de climatisation (1) selon l'une quelconque des revendications précédentes, comprenant au moins un ventilateur configuré pour induire la circulation d'un flux d'air à travers ledit canal d'acheminement (11).

13. Système de climatisation (1) selon l'une quelconque des revendications précédentes, comprenant un système de ventilation constitué d'au moins une canalisation (17) s'étendant entre au moins une bouche d'aspiration (18) et une bouche d'émission (19),
dans lequel ladite bouche d'aspiration (18) est disposée face à l'environnement extérieur pour aspirer l'air et ladite bouche d'émission (19) est disposée face audit environnement intérieur sensiblement à l'opposé dudit corps planaire intérieur (2) par rapport à la direction verticale.

14. Système de climatisation (1) selon l'une quelconque des revendications précédentes, comprenant un système de stockage thermique constitué :
- d'un premier réservoir de stockage d'eau chaude (20) dans lequel l'eau stockée est maintenue à une première température prédéterminée ;
- d'un second réservoir de stockage d'eau froide (21) dans lequel l'eau stockée est maintenue à une seconde température prédéterminée inférieure à ladite première température.

15. Système de climatisation (1) selon les revendications 13 et 14, dans lequel ladite canalisation (17) comprend
une première partie (22) s'étendant en contact avec ledit premier réservoir de stockage d'eau chaude (20) de manière à chauffer le flux d'air acheminé vers ladite bouche d'émission ;
une deuxième partie (23) s'étendant en contact avec ledit second réservoir de stockage d'eau froide (21) de manière à refroidir le flux d'air acheminé vers ladite bouche d'émission ; une troisième partie (24) s'étendant de manière espacée de chaque réservoir de stockage (20, 21) ;
une vanne de régulation (25) configurée pour fonctionner alternativement selon trois modes de fonctionnement, chacun permettant le passage dudit flux d'air le long d'une seule partie de ladite canalisation (17) entre les première, deuxième et troisième parties (22, 23, 24).

16. Système de climatisation (1) selon les revendications 10 et 15, dans lequel ladite unité de commande est configurée pour envoyer un signal de régulation à ladite vanne de régulation (25) de manière à sélectionner le mode de fonctionnement de ladite vanne de régulation (25) en fonction du signal de détection reçu desdits capteurs.
